# EUROPEAN PATENT APPLICATION

(11) **EP 4 543 084 A1**
(43) Date of publication of application: **23.04.2025**
(21) Application number: 23826535.9
(22) Date of filing: 21.06.2023
(51) Int. Cl.: H04W 36/00

(54) **HANDOVER PROCESSING METHOD AND APPARATUS, AND COMMUNICATION DEVICE**

(30) Priority: 24.06.2022 CN 202210730369; 28.02.2023 CN 202310193145
(71) Applicant: Vivo Mobile Communication Co., Ltd., Dongguan, Guangdong 523863 (CN)
(72) Inventor: WANG, Chenxi, Dongguan, Guangdong 523863 (CN); SUN, Peng, Dongguan, Guangdong 523863 (CN); BAO, Wei, Dongguan, Guangdong 523863 (CN)
(74) Representative: Shieldmark
(86) International application number: PCT/CN2023/101800
(87) International publication number: WO 2023/246890

(57) **Abstract**

This application discloses a handover processing method and apparatus, and a communication device, pertaining to the field of communication technologies. The method in embodiments of this application includes: obtaining, by a terminal, first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object; and performing, by the terminal, the first operation according to the first signaling and the second signaling.

## Description

### CROSS-REFERENCE TO RELATED APPLICATIONS

This application claims priority to Chinese Patent Application No. 202210730369.2 filed in China on June 24, 2022, and to Chinese Patent Application No. 202310193145.7 filed in China on February 28, 2023, which are incorporated herein by reference in their entireties.

### TECHNICAL FIELD

This application pertains to the field of communications technologies, and specifically relates to a handover processing method and apparatus and a communication device.

### BACKGROUND

In conventional mobility management, when a terminal moves to a coverage area of a current serving cell, a network indicates the terminal through higher-layer signaling Reconfiguration WithSync (Reconfiguration WithSync) to perform cell handover, which includes behaviors such as higher-layer resetting/reconstruction, applying physical layer configuration of a target cell, access to the target cell, time-frequency synchronization of the target cell, and CSI obtaining. During the above handover operation, the terminal needs to interrupt data transmission from a source cell. Because operations such as higher-layer signaling, higher-layer resetting, and random access occupy more time, a communication interruption time of the terminal is relatively long, and interruption is also more frequent in high-speed mobile scenarios with more frequent cell handover, which may lead to a communication failure of the terminal.

### SUMMARY

Embodiments of this application provide a handover processing method and apparatus, and a communication device, so as to resolve the problem of a relatively long communication interruption time of terminals due to a long handover delay caused when the terminal performs cell handover.

According to a first aspect, a handover processing method is provided, including:
obtaining, by a terminal, first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object; and
performing, by the terminal, the first operation according to the first signaling and the second signaling.

According to a second aspect, a handover processing method is provided, including:
sending, by a network-side device, first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object.

According to a third aspect, a handover processing apparatus is provided, applied to a terminal and including:
a first obtaining module, configured to obtain first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object; and
a first execution module, configured to perform the first operation according to the first signaling and the second signaling.

According to a fourth aspect, a handover processing apparatus is provided, applied to a network-side device and including:
a first sending module, configured to send first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object.

According to a fifth aspect, a terminal is provided, where the terminal includes a processor and a memory, and a program or instructions executable on the processor are stored in the memory. When the program or the instructions are executed by the processor, the steps of the method according to the first aspect are implemented.

According to a sixth aspect, a terminal is provided, including a processor and a communication interface, where the communication interface is configured to obtain first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object; and the processor is configured to perform the first operation according to the first signaling and the second signaling.

According to a seventh aspect, a network-side device is provided, where the network-side device includes a processor and a memory, and a program or instructions executable on the processor are stored in the memory. When the program or the instructions are executed by the processor, the steps of the method according to the second aspect are implemented.

According to an eighth aspect, a network-side device is provided, including a processor or a communication interface. The communication interface is configured to send first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object.

According to a ninth aspect, a handover processing system is provided, including: a terminal and a network-side device, where the terminal may be configured to perform the steps of the method according to the first aspect, and the network-side device may be configured to perform the steps of the method according to the second aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or implement the method according to the second aspect.

According to a twelfth aspect, a computer program/program product is provided, where the computer program/program product is stored in a storage medium, and the computer program/program product is executed by at least one processor to implement the steps of the method according to the first aspect or the second aspect.

In the embodiments of this application, the terminal obtains the first signaling and the second signaling, obtains the configuration information of the first object and the second object according to the first signaling, determines, according to the second signaling, whether to perform handover, determines the target object for handover (one of the second objects, namely the third object), then obtains the configuration information of the third object from the obtained configuration information, and hands over from the first object to the third object based on the configuration information of the third object. In this process, the terminal does not need to parse higher-layer handover signaling to obtain the configuration information of the target object for handover, which reduces a cell handover delay, further reduces a communication interruption time of the terminal, and improves reliability and transmission efficiency of mobility management.

### BRIEF DESCRIPTION OF DRAWINGS

FIG. 1 is a structural diagram of a communications system to which the embodiments of this application are applicable;
FIG. 2 is a schematic diagram of beam management in a cell;
FIG. 3 is a schematic diagram of cross-cell beam management;
FIG. 4 is a first schematic flowchart of a handover processing method according to an embodiment of this application;
FIG. 5 is a second schematic flowchart of a handover processing method according to an embodiment of this application;
FIG. 6 is a first schematic diagram of modules of a handover processing apparatus according to an embodiment of this application;
FIG. 7 is a second schematic diagram of modules of a handover processing apparatus according to an embodiment of this application;
FIG. 8 is a structural block diagram of a communication device according to an embodiment of this application;
FIG. 9 is a structural block diagram of a terminal according to an embodiment of this application; and
FIG. 10 is a structural block diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way can be used interchangeably under appropriate circumstances, so that the embodiments of this application can be implemented in an order other than those illustrated or described here, and objects distinguished by "first" and "second" are usually of one type, and the number of objects is not limited. In addition, "and/or" in the specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

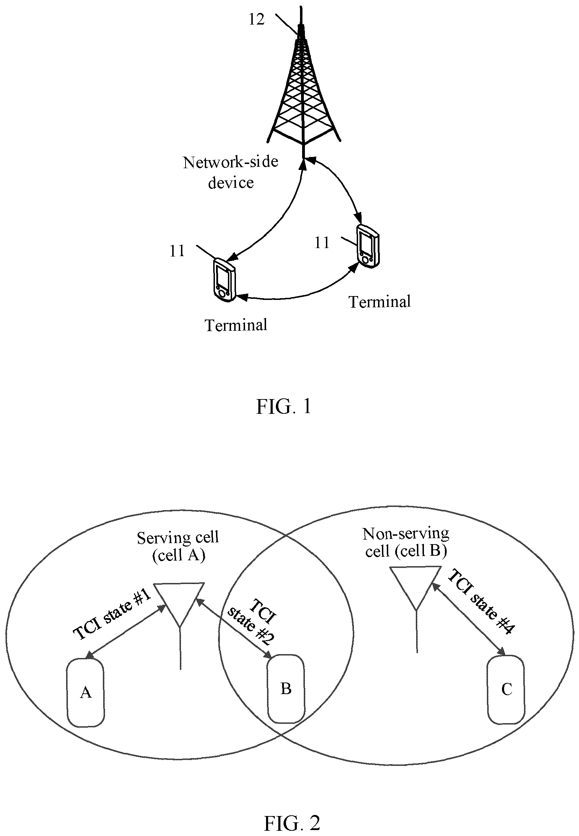

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

To enable persons skilled in the art to better understand the embodiments of this application, the following description is provided.
1. In R15/16, a process of cell handover based on L3 (radio resource control (Radio Resource Control, RRC)) is as follows:
   (1) Measurement reporting: A terminal obtains cell quality by performing measurement on a reference signal (Reference Signal, RS) (synchronization signal/physical broadcast channel signal and PBCH block (Synchronization Signal and PBCH block, SSB) and channel state information-reference signal (Channel State Information-Reference Signal, CSI-RS)) of a current serving cell and a neighboring cell, and reports cell quality.
   (2) Handover preparation: A network side determines, based on cell quality reported by a terminal side, whether cell handover is required.
   (3) Handover command: if determining that cell handover is required, the network side sends a handover request command to a target cell, and the target cell feeds back RRC reconfiguration signaling to a source cell.
   (4-5) Terminal reconfiguration: The source cell sends RRC configuration information of the target cell to the terminal, and the terminal performs RRC reconfiguration after receiving the configuration signaling of the target cell.
   (6-7) Downlink synchronization and automatic gain control (Automatic Gain Control, AGC) adjustment: Based on the first SSB of the target cell after RRC reconfiguration, the terminal decodes a demodulation reference signal (Demodulation Reference Signal, DMRS) of a physical broadcast channel (Physical broadcast channel, PBCH) and the PBCH to obtain a system frame number, a half frame indication, and an SSB index, performs downlink synchronization at a frame level, a slot level, and a symbol level, and adjusts an automatic gain control AGC parameter based on a receive power of the SSB.
   (8-11) Uplink synchronization: After downlink synchronization, the terminal performs uplink synchronization through a random access channel (Random Access Channel, RACH) until it receives a random access response (Random Access Response, RAR) to obtain a TA, and the uplink synchronization is completed.
   (12-13) Handover completion: After the above steps are completed, the source cell sends a cell handover completion indication to the target cell.

According to the above process, it can be seen that for a scenario where the source cell and the target cell are not synchronized, the longest time for obtaining the TA after reception of the handover signaling RRC reconfiguration by the terminal to uplink synchronization is about 71 ms, which is a large delay.

For a scenario where the source cell and the target cell are synchronized, that is, RACH-less based cell handover, after receiving RRC handover signaling, the terminal adjusts an AGC parameter through SSB monitoring and sends uplink information to the target cell based on a TA value of the source cell; and considers the handover successful after receiving a physical downlink control channel (Physical Downlink Control Channel, PDCCH) scrambled by a radio network temporary identifier (Cell RNTI, C-RNTI) of the target cell. It can be seen from the above that in the RACH-less based handover process, the terminal considers that the TA value of the target cell is the same as that of the source cell.

### 2. Beam management

### (1) Intra-cell beam management

In R15/16, beam management can be implemented only in a serving cell, that is, the terminal can perform measurement only on a reference signal RS of the serving cell and report a beam measurement result to the network side. The network side can merely indicate beam information of an RS associated with the serving cell to the terminal, so as to ensure that a beam direction for data reception or transmission of the terminal is consistent with that of the network side. As shown in FIG. 2, users A and B can detect suitable beams only in a coverage area of cell (cell) A, and user C can merely detect suitable beams in cell B. Beam indication is divided into downlink beam indication and uplink beam indication. A downlink beam is indicated by a transmission configuration indicator (Transmission Configuration Indicator, TCI) state, and the downlink beam indication can be indicated through RRC-based direct configuration, or media access control control element (Media Access Control Control Element, MAC CE) indication, or MAC CE+ downlink control information (Downlink Control Information, DCI) joint indication. An uplink beam is indicated by spatial relation (spatial relation), and the uplink beam indication can also be indicated in the above three manners. However, there are some limitations in inter-cell beam management, that is, when cell-edge users or UEs moving to a cell edge, all beams in the serving cell cannot provide them with the best communication quality, so that a throughput of the users cannot be greatly improved through beam management in the cell.

### (2) Cross-cell beam management

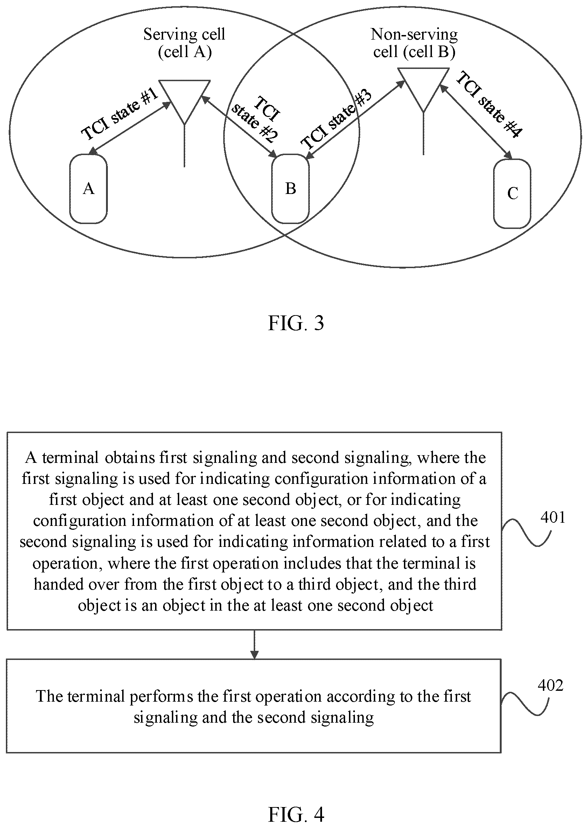

To resolve the problem of low throughput of edge users in intra-cell beam management, the cross-cell beam management feature is introduced in R17. That is, the terminal can perform measurement on not only an RS of the serving cell, but also RSs of multiple neighboring cells; and based on an L1 measurement result reported by the terminal, the network side dynamically indicates an optimal beam to the terminal for scheduling transmission. As shown in FIG. 3, when user A moves to a location of user B, beams of cell A and cell B can be measured and reported. The user A is still in the coverage area of cell A and has not been handed over to cell B; therefore, public messages are still transmitted through the beam of cell A, and for dedicated channels or reference signals, the network can indicate the beam (TCI state#3) of cell B for transmission.

For cross-cell beam indication, a unified transmission configuration indicator unified TCI is introduced in R17. The unified TCI has two modes, namely joint TCI and separate TCI. The joint TCI means that both uplink and downlink channels and/or reference signals use a same beam, and the separate TCI means that uplink channels and/or reference signals use one beam and uplink channels and/or reference signals use one beam. For cross-cell beam indication, a beam of common channels/reference signals is indicated by R15/16 TCI, and a beam of dedicated channels/reference signals can be indicated by unified TCI.

### (3) Handover success judgment criterion

For conventional handover based on higher layer, t304 is started after the terminal receives reconfiguration WithSync, and if the target cell receives an RRC reconfiguration complete message before the t304 expires, the target cell considers that the terminal has successfully handed over to the target cell.

For the scenario where the source cell and the target cell are synchronized, that is, RACH-less, when the terminal receives reconfigurationWithSync, the t304 is started, and the terminal sends an UL grant to the target cell. If receiving a PDCCH scrambled by a C-RNTI of the target cell before t304 expires, the terminal considers that the target cell confirms a successful cell handover.

For conditional handover (Conditional Handover, CHO), the terminal receives configuration information and conditional configuration information of the source cell and a plurality of candidate cells. When an L3 measurement result meets a configuration condition, configuration information of a corresponding candidate cell takes effect and t304 is started. If the terminal completes random access before t304 expires, the target cell considers that the user has successfully completed the handover.

The following describes in detail a handover processing method provided in the embodiments of this application by using some embodiments and application scenarios thereof with reference to the accompanying drawings.

As shown in FIG. 4, an embodiment of this application provides a handover processing method, including the following steps.

Step 401: A terminal obtains first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object.

In this embodiment of this application, the first object is different from the second object, and the first object or the second object is one of the following:
a transmission and reception point (Transmission and Reception Point, TRP);
cell; and
cell group.

The third object is a target object for handover.

Optionally, the first operation further includes a cross-cell beam switching operation.

Optionally, the terminal obtains the first signaling through RRC signaling, and obtains the second signaling through media access control control element (MAC CE) and downlink control information (Downlink Control Information, DCI).

Step 402: The terminal performs the first operation according to the first signaling and the second signaling.

For example, the terminal hands over from the first object to the third object according to the first signaling and the second signaling.

In this embodiment of this application, the terminal obtains the first signaling and the second signaling, obtains the configuration information of the first object and the second object according to the first signaling, determines, according to the second signaling, whether to perform handover, determines the target object for handover (one of the second objects, namely the third object), then obtains the configuration information of the third object from the obtained configuration information, and hands over from the first object to the third object based on the configuration information of the third object. In this process, the terminal does not need to parse higher-layer handover signaling to obtain the configuration information of the target object for handover, which reduces a cell handover delay, further reduces a communication interruption time of the terminal, and improves reliability and transmission efficiency of mobility management.

Optionally, the configuration information indicated by the first signaling includes at least one of the following:
higher-layer configuration information;
physical layer related configuration information; and
first indication information, where the first indication information is used to indicate whether the first object and/or the second object is usable as a target object for handover.

Optionally, the higher-layer configuration information includes at least one of the following:
cell group configuration (Cell GroupConfig);
special cell configuration (SpCellConfig);
reconfiguration with synchronization (Reconfiguration WithSync);
common serving cell configuration (ServingCellConfigCommon); and
serving cell configuration (ServingCellConfig).

Optionally, the physical layer related configuration information includes at least one of the following:
configuration information of a reference signal (Reference Signal, RS) resource, configuration information for channel state information (Channel State Information, CSI) reporting, frequency domain information, a subcarrier spacing (Subcarrier Spacing, SCS), a cell radio network temporary identifier (Cell RNTI, C-RNTI), a random access channel (Random Access Channel, RACH) resource, a transmission configuration indicator (Transmission Configuration Indicator, TCI), and a spatial relation (spatial relation).

The RS includes synchronization signal and PBCH block (Synchronization Signal and PBCH block, SSB), CSI reference signal for beam management (CSI-RS for BM), tracking reference signal (Tracking Reference Signal, TRS), channel state information reference signal (CSI-RS for CSI) used for channel state information, and sounding reference signal (Sounding Reference Signal, SRS), where the TCI includes joint TCI (joint TCI), separate TCI (including DL TCI and UL TCI), and TCI state.

Optionally, the first indication information may be indicated implicitly by using a RACH resource, C-RNTI, measurement configuration or reporting configuration of an aperiodic RS, TCI state grouping information, or spatial relation grouping information in physical layer related configuration information, or may be indicated by adding one higher-layer parameter. The grouping of TCI states or spatial relations is to divide a TCI state or spatial relation configured for each object into a group, where one group of TCI states or spatial relations is used for inter-cell beam management, and the other group of TCI states or spatial relations is used for indicating handover. At least part of TCI states or spatial relations in each group are associated with other objects, or a TCI state or spatial relation in each group is only associated with its own object.

It should be noted that in this embodiment of this application, the configuration information is configured in a unit of object, or the configuration information is shared by the first object and the second object, or part of the configuration information is configured in a unit of object, and part of the configuration information is shared by the first object and the second object. For example, configuration information (time-frequency resource configuration, power control, timing information, spatial relation/transmission configuration indicator, and the like) for uplink signals (including but not limited to SRS, preamble, physical uplink control channel (Physical Uplink Control Channel, PUCCH), or physical uplink shared channel (Physical Uplink Shared Channel, PUSCH)) is configured in a unit of object. The terminal sends an uplink signal based on the configuration information of each object, and if part of uplink signal configuration information is default, sends an uplink signal with reference to a current service object (the first object) or part of uplink signal configuration information for an object whose part of uplink signal configuration information is not defaulted; or if the network configures only one set of uplink signal configuration information, the terminal sends an uplink signal according to the uplink signal configuration information, that is, sends the uplink signal based on timing and power control of the first object; or if the network configures only two sets of configuration information of uplink signals, where one set is used for uplink measurement or transmission of the current serving cell (the first object) and the other set is used for uplink measurement of multiple neighboring cells (the second object). For another example, a TCI state pool is configured in a unit of object, and a configuration manner for TCI states in the TCI state pool can also be divided into two types: one is that part of TCI states in a TCI state pool of the first object is associated with the second object, that is, TCI state configuration information contains an object identifier of the second object; the other is that all TCI states in the TCI state pool of the first object are associated only with the first object, that is, an object identifier is defaulted in the TCI state configuration information, or the TCI state configuration information contains only an object identifier of the first object.

Optionally, information indicated by the second signaling includes at least one of the following:
identification information of at least one first object;
identification information of at least one third object;
at least one piece of second indication information, where the second indication information is transmission configuration indicator state information and/or spatial relation indication information, for example, the second indication information is at least one of TCI state, joint TCI, DL TCI, UL TCI, and spatial relation; in addition, the second indication information further includes an uplink transmission power control parameter, the uplink transmission power control parameter includes at least one of a path loss reference signal, a closed-loop power control configuration parameter, a transmit power basic point, and a path loss compensation factor, and the at least one second indication information corresponds to at least one signal or channel resource;
indication information of at least one uplink signal resource, where the uplink signal is preamble (preamble), SRS, PUCCH, and/or PUSCH, and the uplink signal may be associated with the first object or the third object;
at least one timing advance (Timing Advance, TA) value, where the TA value is used for determining a transmission time of the uplink signal of the first object and/or the third object;
indication information of at least one RACH resource, where the RACH resource is associated with an RS (SSB or CSI-RS) of one or more third objects and/or the RACH resource is a RACH resource of one or more third objects;
indication information of at least one aperiodic RS resource, where the aperiodic RS resource is RS resources of the one or more third objects, or the aperiodic RS resource is RS resources of the one or more first objects and its corresponding quasi co-location source reference signal (QCL source RS) is associated with the one or more third objects;
indication information of at least one aperiodic CSI reporting, where the aperiodic CSI reporting indicates CSI reporting associated with the third object, that is, at least part of measurement resources in CSI measurement resources associated with the CSI reporting are associated with the third object; and
third indication information, where the third indication information is used to indicate whether to perform handover, and the third indication information may be a handover enabling configuration parameter or a beam group identifier.

Optionally, the second indication information is used to indicate quasi co-location information after handover, which can be specifically expressed as the following types:

The second indication information is associated with an identifier of a first beam indication information group, where the first beam indication information group is used for indicating the quasi co-location information after handover. The network configures multiple groups of beam indication information, where one group of beam indication information is used to indicate the quasi co-location information after handover, one group of beam indication information is used to indicate non-handover cross-cell quasi co-location information, and one group of beam indication information is used to indicate quasi co-location information associated with the current serving cell.

The second indication information is associated with a first indicator field, and the first indicator field indicates that the second indication information is used for cell handover.

The identifier of the second indication information indicates that the second indication information is used for cell handover; that is, the network configures a plurality of second indication information, where the second indication information identified by [x1,x2] is used to indicate the quasi co-location information after handover, the second indication information identified by [x3,x4] is used to indicate the non-handover cross-cell quasi co-location information, and the second indication information identified by [x5,x6] is used to indicate the quasi co-location information associated with the current serving cell.

Optionally, that the terminal performs the first operation according to the first signaling and the second signaling includes:
performing handover from the first object to the third object in a case that at least one of the first signaling and the second signaling meets a first condition.

Optionally, the first condition includes at least one of the following:
the second signaling includes target information;
the first indication information indicates that the third object is usable as a target object for handover;
the third indication information indicates to perform handover;
second indication information included in the second signaling is associated with the third object, and the second indication information is used to indicate a control resource set (CORESET) #0 or a transmission configuration indicator state and/or spatial relation of CORESET#0 and a channel related to CORESET#0;
the second indication information is associated with the third object; and
the second indication information is used to indicate a transmission configuration indicator state and/or spatial relation after handover; where
the target information includes at least one of the following:
   an identifier of the third object;
   identification information of at least one first object;
   at least one time advance (TA) value;
   indication information of at least one uplink signal resource;
   indication information of at least one RACH resource;
   indication information of at least one aperiodic RS resource; and
   indication information of at least one aperiodic CSI reporting.

Optionally, the method in this embodiment of this application further includes:
performing, by the terminal, transmission and reception of data based on to a first transmission mode within a first time period; where
the first transmission mode includes at least one of the following:
   the terminal does not monitor a downlink channel of the first object and/or the third object, or the terminal does not expect the first object and/or the third object to transmit a downlink channel within the first time period, or the terminal monitors the downlink channel of the first object and/or the third object;
   the terminal does not transmit an uplink channel of the first object and/or the third object, or the terminal transmits an uplink channel of the first object and/or the third object;
   the terminal does not monitor a first reference signal of the first object and/or the third object, where the first reference signal is a reference signal other than a preset reference signal, or the terminal monitors all reference signals of the first object and/or the third object; where the preset reference signal includes at least one of a reference signal for L1 measurement, a reference signal for L3 measurement, and a network-configured reference signal; for example, the preset reference signals are SSB, SRS, CSI-RS for mobility, and the like;
   the terminal does not transmit a second reference signal of the first object and/or the third object, where the second reference signal is a reference signal other than a preset reference signal, or the terminal transmits all reference signals of the first object and/or the third object; where the preset reference signal includes at least one of a reference signal for L1 measurement, a reference signal for L3 measurement, and a network-configured reference signal;
   the terminal does not transmit an uplink signal and/or channel of a fourth object, or the terminal transmits an uplink signal and/or channel of the fourth object, where the fourth object is an object different from the third object in the at least one second object; and
   the terminal does not monitor a downlink signal and/or channel of the fourth object, or the terminal does not expect the fourth object to transmit a downlink signal and/or channel within the first time period, or the terminal monitors a downlink signal and/or channel of the fourth object.

Optionally, a starting time point of the first time period is a first time point, and/or an ending time point of the first time period is a second time point; where
the first time point includes at least one of the following:
a time point of receiving the second signaling;
a time point at which the terminal starts or finishes higher-layer handover preparation work;
a time point corresponding to the X1-th time unit after a slot in which the terminal feeds back an acknowledgement ACK of the second signaling; where a value of X1 is configured by the network based on a terminal capability or specified by a protocol, and a time unit is symbol/slot/subframe/frame/us/ms/s;
a time point corresponding to the X2-th time unit before the 1st symbol or slot in which the terminal receives or transmits a signal and/or channel of the third object; and
a pre-specified or pre-configured time point or a time point indicated by preset signaling.

The second time point includes at least one of the following:
a corresponding time point obtained by adding a first preset time period to the starting time point of the first time period, where the first preset time period is a pre-specified or pre-configured time period or a time period indicated by preset signaling, and the first preset time period may be an absolute time length indicated by a specific time granularity (symbol, slot, sub-frame, or frame corresponding to a specific numerology);
a time point of receiving first-type signaling, or a time point associated with a time point of receiving the first-type signaling;
a time point of receiving a first-type channel, or a time point associated with the time point of receiving the first-type channel; and
a time point corresponding to expiration of a first timer, where a starting time of the first timer is specified by the protocol, and a duration of the first timer is configured by a network; where the first timer may be a T304 timer, for example, the T304 is started after the terminal receives the second signaling, or started after determining that the second signaling is handover signaling, or started when the terminal starts RACH.

Optionally, an indication manner of the first preset time period includes at least one of the following:
indicating a duration of the first preset time period;
indicating a starting time and duration of the first preset time period;
indicating an ending time of the first preset time period; and
indicating a starting time and an ending time of the first preset time period;

Optionally, a time length of the first preset time period is determined based on at least one of the following:
a processing delay of the second signaling;
a transmission delay for feeding back an ACK of the second signaling;
a processing delay of higher-layer handover preparation for the terminal, such as MAC reconstruction/resetting, RLC reconstruction, or PDCP reconstruction;
a beam handover delay;
a transmission delay between the first object and the second object;
a time required for CSI measurement and reporting, that is, a time for obtaining a CSI;
an uplink synchronization time, that is, a RACH time;
a time-frequency synchronization time, that is, a TRS reception and measurement time; and
a time length corresponding to the number of occurrences of a first event, where the number of occurrences of the first event may indicate the number of transmissions of preamble, the number of transmissions of ACK feedback, the number of occurrences of downlink reference signals, and the like. The time length corresponding to the number of occurrences of the first event is determined based on a product of a configuration period of the first event and the number of occurrences.

Optionally, the first-type signaling includes at least one of the following:
signaling indicating an L3-based handover;
signaling indicating handover cancellation;
signaling indicating successful handover; and
signaling for reconfiguring or activating reception assistance information of a signal of the third object; where the reception assistance information includes but is not limited to spatial information, time-frequency information, or the like.

Alternatively, the first-type channel includes at least one of the following:
a signal and/or channel of the third object received or sent by the 1st terminal.

Optionally, the method in this embodiment of this application further includes:
in a case that a second condition is met, determining, by the terminal, that handover from the first object to the third object is successful; where
the second condition includes at least one of the following:
   within a second time period, a measured value of a third reference signal meets a third condition;
   within the second time period, the number of times the terminal sends a preamble to the third object is less than N, where a value of N is configured by a network or specified by a protocol;
   within the second time period, the terminal successfully accesses the third object, that is, the terminal receives Msg4 or a PDCCH scrambled by a C-RNTI of the third object; and
   the first timer has not expired at an ending time point of the second time period, where the first timer may be specifically a T304 timer.

Optionally, the third condition includes at least one of the following:
an average measured value of the third reference signal within the second time period is greater than a first threshold;
all measured values of the third reference signal within the second time period are greater than a second threshold;
at least one measured value of the third reference signal within the second time period is greater than a third threshold; and
measured values of the third reference signal within the second time period are greater than measured values of all or part of reference signals of the first object.

Optionally, the third reference signal includes at least one of a RS directly or indirectly associated with a TCI state or spatial relation indicated by the second indication information, and all or part of RSs of the third object, where the RS includes SSB, CSI-RS, SRS, and the like.

Optionally, an average measured value or a measured value of the third reference signal within the second time period may be an average measured value or a measured value of the third reference signal in a specific time within the second time period. A starting time, ending time, and duration of the specific time are configured by the network or specified by the protocol. The first threshold, the second threshold, and the third threshold are configured by the network or specified by the protocol.

Optionally, a starting time point of the second time period is a third time point, and/or an ending time point of the second time period is a fourth time point; where
the third time point includes at least one of the following:
a time point of receiving the second signaling;
a time point at which the terminal starts or finishes higher-layer handover preparation work;
a time point corresponding to the X3-th time unit after a slot in which the terminal feeds back an acknowledgement ACK of the second signaling; where a value of X2 is configured by the network or specified by a protocol, and a time unit is symbol/slot/subframe/frame/us/ms/s;
a pre-specified or pre-configured time point or a time point indicated by preset signaling.

The fourth time point includes at least one of the following:
a corresponding time point obtained by adding a second preset time period to the starting time point of the second time period, where the second preset time period is a pre-specified or pre-configured time period or a time period indicated by preset signaling, and the second preset time period may be an absolute time length indicated by a specific time granularity (symbol, slot, sub-frame, or frame corresponding to a specific numerology).
a time point of receiving first-type signaling, or a time point associated with a time point of receiving the first-type signaling;
a time point of receiving a first-type channel, or a time point associated with the time point of receiving the first-type channel; and
a time point corresponding to expiration of a first timer, where a starting time of the first timer is specified by the protocol, and a duration of the first timer is configured by a network, where the first timer may be a T304 timer, for example, the T304 is started after the terminal receives the second signaling, or started after determining that the second signaling is handover signaling, or started when the terminal starts RACH.

Optionally, an indication manner of the second preset time period includes at least one of the following:
indicating a duration of the second preset time period;
indicating an ending time of the second preset time period;
indicating a starting time and duration of the second preset time period; and
indicating a starting time and an ending time of the second preset time period.

Optionally, a time length of the second preset time period is determined based on at least one of the following:
a processing delay of the second signaling;
a transmission delay for feeding back an ACK of the second signaling;
a processing delay of higher-layer handover preparation for the terminal, such as MAC reconstruction/resetting, RLC reconstruction, or PDCP reconstruction;
a transmission delay between the first object and the third object;
a time required for CSI measurement and reporting;
a transmission time of an uplink signal and/or channel;
an uplink synchronization time, that is, a RACH time;
a time-frequency synchronization time; and
a time length corresponding to the number of occurrences of a first event, where the number of occurrences of the first event may indicate the number of transmissions of preamble, the number of transmissions of ACK feedback, the number of occurrences of downlink reference signals, and the like. The time length corresponding to the number of occurrences of the first event is determined based on a product of a configuration period of the first event and the number of occurrences.

Optionally, the first-type signaling includes at least one of the following:
signaling indicating an L3-based handover;
signaling indicating handover cancellation; and
signaling indicating successful handover; or
the first-type channel includes at least one of the following:
   a signal and/or channel of the third object received or sent by the 1st terminal.

Optionally, the method in this embodiment of this application further includes:
performing, by the terminal, data transmission according to a first rule during handover from the first object to the third object or after handover to the third object; where
the first rule includes at least one of the following:
   the terminal transmits at least part of channels and/or signals of the third object according to second indication information carried in the second signaling; where part of channels and/or reference signals of the third object refer to UE-dedicated channels and/or signals, that is, channels and/or signals related to a CORESET associated with SS or CSS type3, or all channels and/or signals of the third object;
   the terminal transmits at least part of channels and/or signals of the third object according to an uplink signal resource indication carried in the second signaling; where optionally, within a specific time, the terminal transmits at least part of the channels and/or signals of the third object according to the uplink signal resource indication carried in the second signaling. For example, the signals and/or channels of the third object are transmitted and received based on the indicated spatial relation of the uplink signal and the specific time is indicated by a network configuration or specified by the protocol. For example, it starts after the terminal receives the second signaling, and ends after the handover is successful, or after the duration is longer than a time length configured by the network, or after the terminal receives the spatial relation and TCI state, of the signal and/or channel of the third object, reconfigured or indicated by the network, or after the terminal receives preset signaling; and
   the terminal transmits at least part of channels and/or signals of the third object based on network-configured and/or indicated beam information; where optionally, the network configuration and/or the indication of beam information may be performed before the handover of the object, during the handover, or after the handover is successful.

Optionally, the method in this embodiment of this application further includes:
in a case that the second signaling is formed by at least one MAC CE, the terminal performs data and/or signal transmission according to a second rule during handover from the first object to the third object or after handover to the third object.

The second rule includes at least one of the following:
in a case that the second MAC CE and the first MAC CE belong to a same transport block, the terminal performs data and/or signal transmission with the third object according to the indication information in the second MAC CE; optionally, the first MAC CE is arranged before the second MAC CE in the transport block; and
in a case that the second MAC CE carries third indication information, the terminal performs data and/or signal transmission with the third object according to the indication information in the second MAC CE.

The first MAC CE is a MAC CE carrying fourth indication information, that is, a cell handover command. The second MAC CE is a MAC CE carrying other indication information than the fourth information, and the other indication information includes transmission configuration information indicating at least one of PUCCH, PUSCH, PDCCH, PDSCH, SRS, and CSI-RS. The transmission configuration information includes at least one of transmission configuration status indication, spatial relation, and power control configuration parameter. The third indication information is used to indicate that the indication information in the second MAC CE is used for data and/or signal transmission of the third object, and the third indication information may be indicated by one bit, where a value of 1 indicates that the terminal transmits data and/or signals with the third object according to the indication information in the second MAC CE. The fourth indication information includes at least one of a handover indication, a third object identifier, and a third object configuration information index.

Optionally, the method in this embodiment of this application further includes:
in a case that the first signaling and the second signaling meet a fourth condition, the terminal performs a second operation, where
the fourth condition includes at least one of the following:
   first configuration information of the first object is the same as first configuration information of the third object; where the first configuration information includes at least one of a transmission configuration indicator list, a spatial relation information list, and a path loss reference signal list;
   the second signaling carries fifth indication information, where the fifth indication information is used for indicating the terminal to perform a second operation, and the third indication information may be indicated by one bit, where a value of 1 indicates that the terminal performs a second operation; and
   the second indication information carried in the second signaling has an association relationship with a fourth reference signal, where the fourth reference signal is a reference signal of the first object or the third object detected by the terminal within a preset time before reception of the second signaling, and the association relationship includes at least one of the following:
      a reference signal associated with the second indication information is the same as the fourth reference signal;
      a reference signal associated with the second indication information has a direct quasi co-location relationship with the fourth reference signal, where the direct quasi co-location relationship indicates that the reference signal associated with the second indication information is a quasi co-location source reference signal of the fourth reference signal or the fourth reference signal is a quasi co-location source reference signal of the reference signal associated with the second indication information; and
      a reference signal associated with the second indication information has an indirect quasi co-location relationship with the fourth reference signal, where the indirect quasi co-location relationship indicates that the quasi co-location source reference signal of the reference signal associated with the second indication information has a direct quasi co-location relationship with the quasi co-location source reference signal of the fourth reference signal.

The second operation includes at least one of the following:
the terminal does not perform beam measurement on a reference signal associated with the second indication information;
the terminal does not perform time-frequency tracking on a reference signal associated with the second indication information; and
the terminal does not perform path loss detection on the reference signal associated with the second indication information.

Optionally, the method in this embodiment of this application further includes:
in a case that the second signaling includes no second indication information, performing, by the terminal, data and/or signal transmission according to sixth indication information during handover from the first object to the third object or after handover to the third object. The sixth indication information is indication information received by the terminal before reception of the second signaling, and the sixth indication information is used to indicate at least one of a transmission configuration indicator state, spatial relation information, and a power control configuration parameter.

In this embodiment of this application, the terminal obtains the first signaling and the second signaling, obtains the configuration information of the first object and the second object according to the first signaling, determines, according to the second signaling, whether to perform handover, determines the target object for handover (one of the second objects, namely the third object), then obtains the configuration information of the third object from the obtained configuration information, and hands over from the first object to the third object based on the configuration information of the third object. In this process, the terminal does not need to parse higher-layer handover signaling to obtain the configuration information of the target object for handover. In addition, advance RACH being performed to implement uplink synchronization of the target object for handover greatly reduces a cell handover delay, while operations of tracking downlink time-frequency synchronization of the second object in advance and performing CSI measurement and reporting of the second object in advance can further reduce a communication interruption time of the terminal and improve reliability and transmission efficiency of mobility management.

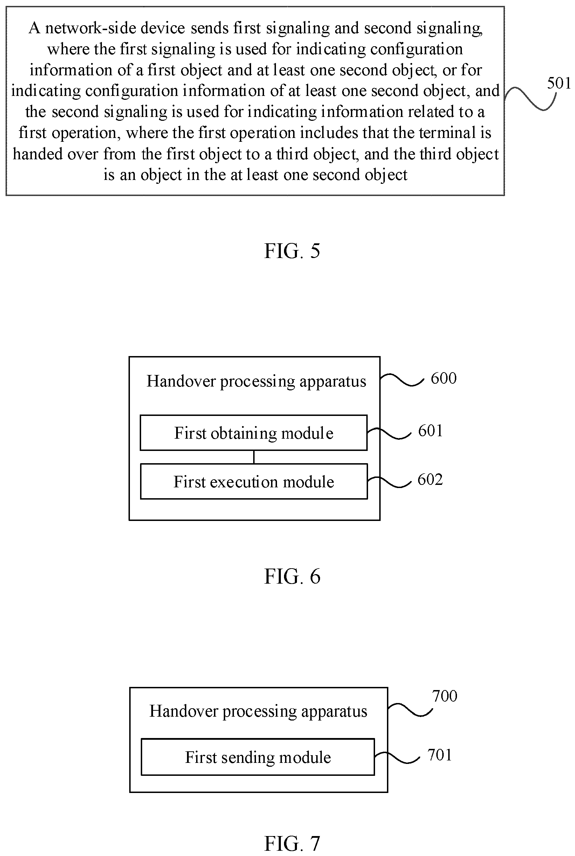

As shown in FIG. 5, an embodiment of this application provides a handover processing method, including the following step.

Step 501: A network-side device sends first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object.

Optionally, that the network-side device sends the first signaling and second signaling includes:
sending, by the network-side device, the first signaling through RRC signaling, and sending the second signaling through MAC CE and DCI.

Optionally, the configuration information indicated by the first signaling includes at least one of the following:
higher-layer configuration information;
physical layer related configuration information; and
first indication information, where the first indication information is used to indicate whether the first object and/or the second object is usable as a target object for handover.

Optionally, information indicated by the second signaling includes at least one of the following:
identification information of at least one first object;
identification information of at least one third object;
at least one piece of second indication information, where the second indication information is transmission configuration indicator state information and/or spatial relation indication information; where the second indication information further include an uplink power control parameter, the uplink power control parameter includes at least one of a path loss reference signal, a closed-loop power control configuration parameter, a transmit power basic point, and a path loss compensation factor, and the at least one second indication information corresponds to at least one signal or channel resource;
indication information of at least one uplink signal resource;
at least one time advance TA value;
indication information of at least one RACH resource;
indication information of at least one aperiodic RS resource;
indication information of at least one aperiodic CSI reporting; and
third indication information, where the third indication information is used to indicate whether to perform handover.

The first signaling and the second signaling have been described in detail in the method embodiment of the terminal side, and will not be repeated here.

In this embodiment of this application, the terminal obtains the first signaling and the second signaling, and based on the configuration information of the first object and the second object indicated by the first signaling and according to the second signaling, determines whether to perform handover, determines the target object for handover, and hands over from the first object to the third object. In this process, the terminal does not need to parse higher-layer handover signaling to obtain the configuration information of the target object for handover. In addition, advance RACH being performed to implement uplink synchronization of the target object for handover greatly reduces a cell handover delay, while operations of tracking downlink time-frequency synchronization of the second object in advance and performing CSI measurement and reporting of the second object in advance can further reduce a communication interruption time of the terminal and improve reliability and transmission efficiency of mobility management.

The following describes the handover processing method in the embodiments of this application with reference to specific application scenarios.

In a first specific embodiment of this application, the handover procedure in a single carrier scenario includes:
Step 1: A terminal receives first signaling and second signaling.
Step 2: The terminal combines the first signaling and the second signaling to determine whether the second signaling is a handover command. If a first condition is satisfied (for details, refer to the above description), the second signaling is a handover command; otherwise, the terminal does not perform handover, and then follows the R17 cross-cell beam management procedure.
Step 3: After the terminal determines that the second signaling is handover signaling, the handover procedure is divided into the following two cases.

Case 1: RACH-less (cell handover based on synchronization between a source cell and a target cell) or advance RACH.

Definition of interruption time (that is, the first time period mentioned above):
A starting time of the interruption time includes at least one of the following:
a time point of receiving the second signaling for indicating handover;
a time point at which the terminal starts or finishes higher-layer handover preparation work;
a time point corresponding to the X1-th time unit after a slot in which the terminal feeds back an ACK of the second signaling for indicating handover, where a value of X1 is configured by the network or specified by the protocol, a time unit is symbol/slot/subframe/frame/us/ms/s, and for the value of X1, an uplink transmission delay is at least considered; and
a time point corresponding to the X2-th time unit before the terminal receives or sends the 1st symbol/slot/subframe/frame of a signal and/or channel of the 1st third object after receiving handover signaling, where a value of X2 is configured by the network based on a terminal capability or specified by a protocol, and a time unit is symbol/slot/subframe/frame/us/ms/s; and for the value of X2, a handover delay of an RF link, uplink and downlink switching, and the like in an inter-frequency scenario are at least considered.

An ending time of the interruption time includes at least one of the following:
a time point corresponding to the Y1-th time unit after a slot in which the terminal feeds back an ACK of the second signaling for indicating handover, where a value of Y1 is configured by the network or specified by the protocol, and a time unit is symbol/slot/subframe/frame/us/ms/s.

At least one of the following factors is mainly considered for the value of Y1:
a transmission delay for feeding back an ACK of the second signaling;
a processing delay of higher-layer handover preparation for the terminal (such as MAC reconstruction/resetting, RLC reconstruction, or PDCP reconstruction);
a beam handover delay;
a transmission delay between the first object and the third object;
a time-frequency synchronization time, that is, a TRS reception and measurement time;
a time required for obtaining CSI, that is, a time of CSI measurement and reporting; and
the 1st symbol/slot/subframe/frame of a signal and/or channel of the 1st third object received or sent by the terminal after reception of handover signaling.

A handover success judgment criterion includes at least one of the following:
the terminal considers a handover successful at the Y2-th time unit after a slot in which the terminal feeds back an ACK of the second signaling for indicating handover, where a value of Y2 is configured by the network or specified by the protocol, and a time unit is symbol/slot/subframe/frame/us/ms/s;
after receiving the handover signaling, the terminal receives a PDCCH scrambled by a C-RNTI of the third object, and the terminal considers the handover successful;
after receiving the handover signaling, the terminal receives indication information for triggering measurement and/or reporting of the RS resource of the third object;
after receiving the handover signaling, a measured value of the second RS meets a third condition, where the third condition includes at least one of the following:
   unconditional;
   an average measured value of the third RS in a specific time is greater than a first threshold;
   a measured value of the third RS in a specific time is greater than a second threshold;
   at least one measured value of the third RS in a specific time is greater than a third threshold;
   a measured value of the third RS in a specific time is greater than measured values of all or part of the RSs of the first object; and
   the third RS includes at least one of a RS directly or indirectly associated with a TCI state or spatial relation indicated by the handover signaling, and all or part of RSs of the third object, where the RS includes SSB, CSI-RS, SRS, and the like.

A starting time, ending time, and duration of the specific time are configured by the network or specified by the protocol. The first threshold, the second threshold, and the third threshold are configured by the network or specified by the protocol.

### Case 2: RACH

The terminal feeds back, at a slot n, an acknowledgement ACK of receiving the second signaling, and after slot n+X4 time units, sends one or more preambles according to a preset rule based on a RACH resource (CFRA or CBRA) associated with the third object configured in the first signaling, so as to access the third object. A value of X4 is configured by the network or specified by the protocol and a time unit is symbol/slot/subframe/frame/us/ms/s.

Interruption time (first time period):
A starting time of the interruption time: is the same as that of RACH-less.

An ending time of the interruption time includes at least one of the following:
a time point corresponding to reception of signaling indicating successful random access or a channel carrying information indicating successful random access by the terminal; and
a time point corresponding to the Y3-th time unit after the terminal receives signaling indicating successful random access or a channel carrying information indicating successful random access, where a value of Y3 is configured by the network or specified by the protocol, and a time unit is symbol/slot/subframe/frame/us/ms/s.

At least one of the following factors is mainly considered for the value of Y3:
a processing delay of higher-layer handover preparation for the terminal (such as MAC reconstruction/resetting, RLC reconstruction, or PDCP reconstruction);
a beam handover delay;
a time-frequency synchronization time, that is, a TRS reception and measurement time;
a time required for obtaining CSI, that is, a time of CSI measurement and reporting; and
the 1st symbol/slot/subframe/frame of a signal and/or channel of the 1st third object received or sent by the terminal after reception signaling indicating successful random access or a channel carrying information indicating successful random access.

A handover success judgment criterion includes at least one of the following:
during T304 timing, the terminal successfully accesses the third object, or the terminal successfully accesses the third object and completes at least one operation of beam switching, time-frequency synchronization, CSI measurement and reporting; in this case, the terminal considers the handover successful;
the T304 is started after the terminal receives the second signaling, or started after determining that the second signaling is handover signaling, or started when the terminal starts RACH; and
after receiving the handover signaling, a measured value of the third RS meets a third condition, where the third condition includes at least one of the following:
   unconditional;
   an average measured value of the third RS in a specific time is greater than a first threshold;
   a measured value of the third RS in a specific time is greater than a second threshold;
   at least one measured value of the third RS in a specific time is greater than a third threshold;
   a measured value of the third RS in a specific time is greater than measured values of all or part of the RSs of the first object; and
   the third RS includes at least one of a RS directly or indirectly associated with a TCI state or spatial relation indicated by the handover signaling, and all or part of RSs of the third object, where the RS includes SSB, CSI-RS, SRS, and the like.

A starting time, ending time, and duration of the specific time are configured by the network or specified by the protocol. The first threshold, the second threshold, and the third threshold are configured by the network or specified by the protocol.

Step 4: In the process of handover or after successful handover, the terminal performs data transmission according to the first rule.

In a second specific embodiment of this application, handover in the carrier aggregation scenario includes the following scenarios:
Scenario 1: Only an SCell detects poor cell quality or poor beam quality, and SCell transformation is implemented through SCell addition and/or SCell activation in the existing technologies or through L1/L2 handover.
Scenario 2: Only a PCell/PSCell detects poor cell quality or poor beam quality, and a handover procedure in the PCell/PSCell is the same as that of the first specific embodiment, or is the same as the following processing manner 2.
Scenario 3: Both the PCell/PSCell and the SCell detect poor cell quality or poor beam quality, and have the following processing manners:
   Processing manner 1 (Option-1): Handover is performed only in the PCell/PSCell, and SCell transformation is implemented through SCell addition and/or SCell activation in the existing technologies; a handover procedure in the PCell/PSCell is the same as that of the first specific embodiment.

Processing manner 2 (Option-2): Handover is performed in a unit of cell group.

Processing manner 3 (Option-3): Change of the PCell/PSCell and the SCell is implemented through L1/L2 handover.

A difference between the foregoing processing manners 2 and 3 and the foregoing first specific embodiment is as follows:
Step 1: The terminal receives first signaling and second signaling.

Configuration of the first signaling: In Option-2, configuration is made using a cell group as an object, and in the first specific embodiment and Option-3, configuration is made using a cell as an object.

Second signaling: In Option-2 and the first embodiment, the second signaling includes only one identifier of the first object and the third object, respectively; in Option-3, the second signaling may include identifiers of multiple first objects and third objects; in the first embodiment, the second signaling indicates only one beam information; in Option-2 and Option-3, one or more beam information may be indicated in the second signaling. Besides beam information, this holds true for RS resource indication, CSI measurement and reporting indication, TA, and uplink signal resource indication.

Step 2: The terminal combines the first signaling and the second signaling to determine whether the second signaling is a handover command. If a first condition is satisfied, the second signaling is a handover command; otherwise, the terminal does not perform handover, and then follows the R17 cross-cell beam management procedure. Specific content of the first condition is the same as that of the first specific embodiment.

Step 3: After determining that the second signaling is switching signaling, the terminal determines whether the handover is successful, and determines a data interruption time.

Compared with the first specific embodiment in which determining whether the handover is successful and determining an interruption time are implemented in a unit of cell, Option 2 and Option 3 may be the same as the first specific embodiment, that is, determining is performed in a unit of cell, or determining whether the handover is successful and determining the interruption time corresponding to the handover may be implemented in a unit of multiple cells or cell groups. For example, when successful handover is performed in all cells, the terminal considers the handover successful; otherwise, the handover fails. The starting time of the interruption time is an earliest starting time in interruption times of all cells in the plurality of cells or cell groups, and the ending time is the latest ending time in the interruption times of all cells in the plurality of cells or cell groups. During the interruption time, the terminal performs data transmission and reception in the plurality of cells or cell groups according to the first transmission mode.

Step 4: In the process of handover or after successful handover, the terminal performs data transmission according to the first rule. The first rule is the same as that in the first specific embodiment, and specific implementation is different as follows:
when only one beam information or uplink signal resource indication is indicated in the second signaling, and one or more third objects indicated in the second signaling are configured to support simultaneous beam updating, the terminal performs data transmission and reception in the one or more third objects based on the indicated beam;
when a plurality of beam information or uplink signal resource indications are indicated in the second signaling, and one or more third objects indicated in the second signaling are configured to support simultaneous beam update, the terminal selects beam indication information or uplink signal resource indication with the smallest identifier according to a predetermined rule, or selects beam indication information or uplink signal resource indication with the best measurement result, and after determining a target beam or uplink signal resource indication from the plurality of beam information or uplink signal resource indications, performs data transmission and reception in the one or more third objects based on the target beam or uplink signal resource indication;

When a plurality of beam information or uplink signal resource indications are indicated in the second signaling, and one or more third objects indicated in the second signaling are not configured to support simultaneous beam update, after determining beam information or uplink signal resource indications respectively corresponding to the plurality of objects according to the predetermined rule, the terminal performs data transmission and reception in a corresponding object based on their respective beam information or uplink signal resource indication.

In this embodiment of this application, the terminal obtains the first signaling and the second signaling, and based on the configuration information of the first object and the second object indicated by the first signaling and according to the second signaling, determines whether to perform handover, determines the target object for handover, and hands over from the first object to the third object. In this process, the terminal does not need to parse higher-layer handover signaling to obtain the configuration information of the target object for handover. In addition, advance RACH being performed to implement uplink synchronization of the target object for handover greatly reduces a cell handover delay, while operations of tracking downlink time-frequency synchronization of the second object in advance and performing CSI measurement and reporting of the second object in advance can further reduce a communication interruption time of the terminal and improve reliability and transmission efficiency of mobility management.

For the handover processing method provided in the embodiments of this application, the execution subject may be a handover processing apparatus. In the embodiments of this application, the handover processing method being performed by the handover processing apparatus is used as an example to describe the handover processing apparatus provided in the embodiments of this application.

As shown in FIG. 6, a handover processing apparatus 600 is provided, applied to a terminal. The apparatus includes:
a first obtaining module 601, configured to obtain first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object; and
a first execution module 602, configured to perform the first operation according to the first signaling and the second signaling.

Optionally, the configuration information indicated by the first signaling includes at least one of the following:
higher-layer configuration information;
physical layer related configuration information; and
first indication information, where the first indication information is used to indicate whether the first object and/or the second object is usable as a target object for handover.

Optionally, information indicated by the second signaling includes at least one of the following:
identification information of at least one first object;
identification information of at least one third object;
at least one piece of second indication information, where the second indication information is transmission configuration indicator state information and/or spatial relation indication information; where the second indication information further include an uplink transmit power control parameter, the uplink power control parameter includes at least one of a path loss reference signal, a closed-loop power control configuration parameter, a transmit power basic point, and a path loss compensation factor, and the at least one second indication information corresponds to at least one signal or channel resource;
indication information of at least one uplink signal resource;
at least one time advance TA value;
indication information of at least one RACH resource;
indication information of at least one aperiodic RS resource;
indication information of at least one aperiodic CSI reporting; and
third indication information, where the third indication information is used to indicate whether to perform handover.

Optionally, the first execution module is configured to perform handover from the first object to the third object in a case that at least one of the first signaling and the second signaling meets a first condition.

Optionally, the first condition includes at least one of the following:
the second signaling includes target information;
the first indication information indicates that the third object is usable as a target object for handover;
the third indication information indicates to perform handover;
second indication information included in the second signaling is associated with the third object, and the second indication information is used to indicate a control resource set CORESET#0 or a transmission configuration indicator state and/or spatial relation of CORESET#0 and a channel related to CORESET#0;
the second indication information is associated with the third object; and
the second indication information is used to indicate a transmission configuration indicator state and/or spatial relation after handover; where
the target information includes at least one of the following:
   an identifier of the third object;
   identification information of at least one first object;
   at least one time advance TA value;
   indication information of at least one uplink signal resource;
   indication information of at least one RACH resource;
   indication information of at least one aperiodic RS resource; and
   indication information of at least one aperiodic CSI reporting.

Optionally, the apparatus in this embodiment of this application further includes:
a first transceiver module, configured to perform transmission and reception of data based on to a first transmission mode within a first time period; where
the first transmission mode includes at least one of the following:
   the terminal does not monitor a downlink channel of the first object and/or the third object, or the terminal does not expect the first object and/or the third object to transmit a downlink channel within the first time period, or the terminal monitors the downlink channel of the first object and/or the third object;
   the terminal does not transmit an uplink channel of the first object and/or the third object, or the terminal transmits an uplink channel of the first object and/or the third object;
   the terminal does not monitor a first reference signal of the first object and/or the third object, where the first reference signal is a reference signal other than a preset reference signal, or the terminal monitors all reference signals of the first object and/or the third object; where the preset reference signal includes at least one of a reference signal for L1 measurement, a reference signal for L3 measurement, and a network-configured reference signal;
   the terminal does not transmit a second reference signal of the first object and/or the third object, where the second reference signal is a reference signal other than a preset reference signal, or the terminal transmits all reference signals of the first object and/or the third object; where the preset reference signal includes at least one of a reference signal for L1 measurement, a reference signal for L3 measurement, and a network-configured reference signal;
   the terminal does not transmit an uplink signal and/or channel of a fourth object, or the terminal transmits an uplink signal and/or channel of the fourth object, where the fourth object is an object different from the third object in the at least one second object; and
   the terminal does not monitor a downlink signal and/or channel of the fourth object, or the terminal does not expect the fourth object to transmit a downlink signal and/or channel within the first time period, or the terminal monitors a downlink signal and/or channel of the fourth object.

Optionally, a starting time point of the first time period is a first time point, and/or an ending time point of the first time period is a second time point; where
the first time point includes at least one of the following:
a time point of receiving the second signaling;
a time point at which the terminal starts or finishes higher-layer handover preparation work;
a time point corresponding to the X1-th time unit after a slot in which the terminal feeds back an acknowledgement ACK of the second signaling;
a time point corresponding to the X2-th time unit before the 1st symbol or slot in which the terminal receives or transmits a signal and/or channel of the third object; and
a pre-specified or pre-configured time point or a time point indicated by preset signaling; and
the second time point includes at least one of the following:
   a corresponding time point obtained by adding a first preset time period to the starting time point of the first time period, where the first preset time period is a pre-specified or pre-configured time period or a time period indicated by preset signaling;
   a time point of receiving first-type signaling, or a time point associated with a time point of receiving the first-type signaling;
   a time point of receiving a first-type channel, or a time point associated with the time point of receiving the first-type channel; and
   a time point corresponding to expiration of a first timer, where a starting time of the first timer is specified by the protocol, and a duration of the first timer is configured by a network.

Optionally, a time length of the first preset time period is determined based on at least one of the following:
a processing delay of the second signaling;
a transmission delay for feeding back an ACK of the second signaling;
a processing delay of higher-layer handover preparation for the terminal;
a beam handover delay;
a transmission delay between the first object and the third object;
a time required for CSI measurement and reporting;
an uplink synchronization time;
a time-frequency synchronization time; and
a time length corresponding to the number of occurrences of a first event.

Optionally, the apparatus in this embodiment of this application further includes:
a first determining module, configured to: in a case that a second condition is met, determine that handover from the first object to the third object is successful; where
the second condition includes at least one of the following:
   within a second time period, a measured value of a third reference signal meets a third condition;
   within the second time period, the number of times the terminal sends a preamble to the third object is less than N, where a value of N is configured by a network or specified by a protocol;
   within the second time period, the terminal successfully accesses the third object; and
   the first timer has not expired at an ending time point of the second time period.

Optionally, the third condition includes at least one of the following:
an average measured value of the third reference signal within the second time period is greater than a first threshold;
all measured values of the third reference signal within the second time period are greater than a second threshold;
at least one measured value of the third reference signal within the second time period is greater than a third threshold; and
measured values of the third reference signal within the second time period are greater than measured values of all or part of reference signals of the first object.

Optionally, a starting time point of the second time period is a third time point, and/or an ending time point of the second time period is a fourth time point; where
the third time point includes at least one of the following:
a time point of receiving the second signaling;
a time point at which the terminal starts or finishes higher-layer handover preparation work;
a time point corresponding to the X3-th time unit after a slot in which the terminal feeds back an acknowledgement ACK of the second signaling; and
a pre-specified or pre-configured time point or a time point indicated by preset signaling; and

The fourth time point includes at least one of the following:
a corresponding time point obtained by adding a second preset time period to the starting time point of the second time period, where the second preset time period is a pre-specified or pre-configured time period or a time period indicated by preset signaling;
a time point of receiving first-type signaling, or a time point associated with a time point of receiving the first-type signaling;
a time point of receiving a first-type channel, or a time point associated with the time point of receiving the first-type channel; and
a time point corresponding to expiration of a first timer, where a starting time of the first timer is specified by the protocol, and a duration of the first timer is configured by a network.

Optionally, a time length of the second preset time period is determined based on at least one of the following:
a processing delay of the second signaling;
a transmission delay for feeding back an ACK of the second signaling;
a processing delay of higher-layer handover preparation for the terminal;
a transmission delay between the first object and the third object;
a time required for CSI measurement and reporting;
a transmission time of an uplink signal and/or channel;
an uplink synchronization time;
a time-frequency synchronization time; and
a time length corresponding to the number of occurrences of a first event.

Optionally, the first-type signaling includes at least one of the following:
signaling indicating an L3-based handover;
signaling indicating handover cancellation;
signaling indicating successful handover; and
signaling for reconfiguring or activating reception assistance information of a signal of the third object; or
the first-type channel includes at least one of the following:
   a signal and/or channel of the third object received or sent by the 1st terminal.

Optionally, the apparatus in this embodiment of this application further includes:
a first transmission module, configured to perform data transmission according to a first rule during handover from the first object to the third object or after handover to the third object; where
the first rule includes at least one of the following:
   the terminal transmits at least part of channels and/or signals of the third object according to second indication information carried in the second signaling;
   the terminal transmits at least part of channels and/or signals of the third object according to an uplink signal resource indication carried in the second signaling; and
   the terminal transmits at least part of channels and/or signals of the third object based on network-configured and/or indicated beam information.

In this embodiment of this application, the terminal obtains the first signaling and the second signaling, and based on the configuration information of the first object and the second object indicated by the first signaling and according to the second signaling, determines whether to perform handover, determines the target object for handover, and hands over from the first object to the third object. In this process, the terminal does not need to parse higher-layer handover signaling to obtain the configuration information of the target object for handover. In addition, advance RACH being performed to implement uplink synchronization of the target object for handover greatly reduces a cell handover delay, while operations of tracking downlink time-frequency synchronization of the second object in advance and performing CSI measurement and reporting of the second object in advance can further reduce a communication interruption time of the terminal and improve reliability and transmission efficiency of mobility management.

The handover processing apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The handover processing apparatus provided in this embodiment of this application can implement the processes implemented in the method embodiment in FIG. 4, with the same technical effects achieved. To avoid repetition, details are not described herein again.

As shown in FIG. 7, an embodiment of this application further provides a handover processing apparatus 700, applied to a network-side device. The apparatus includes:
a first sending module 701, configured to send first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object.

Optionally, the first sending module is configured to send the first signaling through RRC signaling, and send the second signaling through MAC CE and DCI.

Optionally, the configuration information indicated by the first signaling includes at least one of the following:
higher-layer configuration information;
physical layer related configuration information; and
first indication information, where the first indication information is used to indicate whether the first object and/or the second object is usable as a target object for handover.

Optionally, information indicated by the second signaling includes at least one of the following:
identification information of at least one first object;
identification information of at least one third object;
at least one piece of second indication information, where the second indication information is transmission configuration indicator state information and/or spatial relation indication information; where in addition, the second indication information further include an uplink power control parameter, the uplink power control parameter includes at least one of a path loss reference signal, a closed-loop power control configuration parameter, a transmit power basic point, and a path loss compensation factor, and the at least one second indication information corresponds to at least one signal or channel resource;
indication information of at least one uplink signal resource;
at least one time advance TA value;
indication information of at least one RACH resource;
indication information of at least one aperiodic RS resource;
indication information of at least one aperiodic CSI reporting; and
third indication information, where the third indication information is used to indicate whether to perform handover.

In this embodiment of this application, the network-side device sends the first signaling and the second signaling, and the terminal obtains the first signaling and the second signaling, obtains the configuration information of the first object and the second object according to the first signaling, determines, according to the second signaling, whether to perform handover, determines the target object for handover (one of the second objects, namely the third object), then obtains the configuration information of the third object from the obtained configuration information, and hands over from the first object to the third object based on the configuration information of the third object. In this process, the terminal does not need to parse higher-layer handover signaling to obtain the configuration information of the target object for handover. In addition, advance RACH being performed to implement uplink synchronization of the target object for handover greatly reduces a cell handover delay, while operations of tracking downlink time-frequency synchronization of the second object in advance and performing CSI measurement and reporting of the second object in advance can further reduce a communication interruption time of the terminal and improve reliability and transmission efficiency of mobility management.

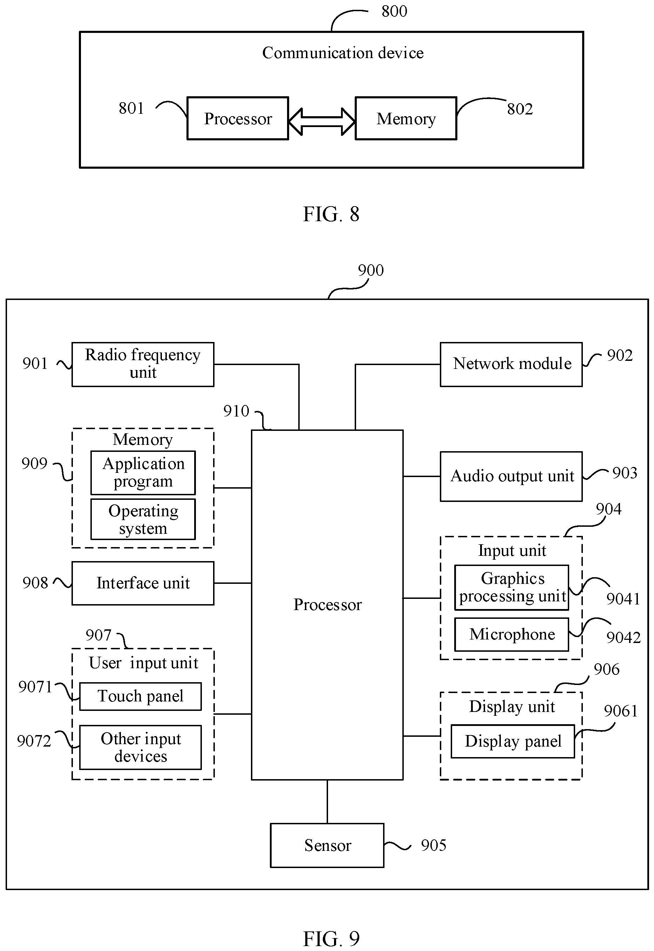

Optionally, as shown in FIG. 8, an embodiment of this application further provides a communication device 800, including a processor 801, a memory 802, and a program or instructions stored in the memory 802 and executable on the processor 801. For example, when the communication device 800 is a terminal and when the program or the instructions are executed by the processor 801, the steps of the foregoing embodiments of the handover processing method on the terminal side are implemented, with the same technical effects achieved. When the communication device 800 is a network-side device and when the program or the instructions are executed by the processor 801, the processes of the foregoing embodiment of the handover processing method on the network-side device side are implemented, with the same technical effects achieved. To avoid repetition, details are not described herein again.

An embodiment of this application further provides a terminal, including a processor and a communication interface, where the communication interface is configured to obtain first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object; and the processor is configured to perform the first operation according to the first signaling and the second signaling. The terminal embodiments correspond to the foregoing terminal-side method embodiments, and the implementation processes and implementations of the foregoing method embodiments can be applied to the terminal embodiments, with the same technical effects achieved. Specifically, FIG. 9 is a schematic diagram of a hardware structure of a terminal for implementing the embodiments of this application.

The terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) supplying power to the components, and the power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or a combination of some components, or the components disposed differently. Details are not described herein again.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, and the like. The user input unit 907 may include at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a power on/off key), a trackball, a mouse, a joystick, and the like. Details are not described herein.

In this embodiment of this application, the radio frequency unit 901 receives downlink data from a network-side device, and then sends the downlink data to the processor 910 for processing. In addition, the radio frequency unit 901 may send uplink data to the network-side device. Generally, the radio frequency unit 901 includes but is not limited to an antenna, an amplifier, a transceiver, a coupler, a low noise amplifier, a duplexer, and the like.

The memory 909 may be configured to store software programs or instructions and various data. The memory 909 may include a first storage area for storing a program or instructions and a second storage area for storing data. The first storage area may store an operating system, an application program or instruction required by at least one function (for example, a sound playback function or an image playback function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 909 in the embodiments of this application includes but is not limited to these and any other suitable types of memories.

The processor 910 may include one or more processing units. Optionally, an application processor and a modem processor may be integrated in the processor 910. This application processor primarily processes operations involving an operating system, user interfaces, application programs, and the like. The modem processor primarily processes radio communication signals, for example, being a baseband processor. It can be understood that the modem processor may alternatively be not integrated in the processor 910.

The radio frequency unit 901 is configured to obtain first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object; and
the processor 910 is configured to perform the first operation according to the first signaling and the second signaling.

In this embodiment of this application, the terminal obtains the first signaling and the second signaling, obtains the configuration information of the first object and the second object according to the first signaling, determines, according to the second signaling, whether to perform handover, determines the target object for handover (one of the second objects, namely the third object), then obtains the configuration information of the third object from the obtained configuration information, and hands over from the first object to the third object based on the configuration information of the third object. In this process, the terminal does not need to parse higher-layer handover signaling to obtain the configuration information of the target object for handover, which reduces a cell handover delay, further reduces a communication interruption time of the terminal, and improves reliability and transmission efficiency of mobility management.

Optionally, the configuration information indicated by the first signaling includes at least one of the following:
higher-layer configuration information;
physical layer related configuration information; and
first indication information, where the first indication information is used to indicate whether the first object and/or the second object is usable as a target object for handover.

Optionally, information indicated by the second signaling includes at least one of the following:
identification information of at least one first object;
identification information of at least one third object;
at least one piece of second indication information, where the second indication information is transmission configuration indicator state information and/or spatial relation indication information; where the second indication information further include an uplink power control parameter, the uplink power control parameter includes at least one of a path loss reference signal, a closed-loop power control configuration parameter, a transmit power basic point, and a path loss compensation factor, and the at least one second indication information corresponds to at least one signal or channel resource;
indication information of at least one uplink signal resource;
at least one time advance TA value;
indication information of at least one RACH resource;
indication information of at least one aperiodic RS resource;
indication information of at least one aperiodic CSI reporting; and
third indication information, where the third indication information is used to indicate whether to perform handover.

Optionally, the processor 910 is configured to:
performing handover from the first object to the third object in a case that at least one of the first signaling and the second signaling meets a first condition.

Optionally, the first condition includes at least one of the following:
the second signaling includes target information;
the first indication information indicates that the third object is usable as a target object for handover;
the third indication information indicates to perform handover;
second indication information included in the second signaling is associated with the third object, and the second indication information is used to indicate a control resource set CORESET#0 or a transmission configuration indicator state and/or spatial relation of CORESET#0 and a channel related to CORESET#0;
the second indication information is associated with the third object; and
the second indication information is used to indicate a transmission configuration indicator state and/or spatial relation after handover; where
the target information includes at least one of the following:
   an identifier of the third object;
   identification information of at least one first object;
   at least one time advance TA value;
   indication information of at least one uplink signal resource;
   indication information of at least one RACH resource;
   indication information of at least one aperiodic RS resource; and
   indication information of at least one aperiodic CSI reporting.

Optionally, the radio frequency unit 901 is configured to:
perform transmission and reception of data based on to a first transmission mode within a first time period; where
the first transmission mode includes at least one of the following:
   the terminal does not monitor a downlink channel of the first object and/or the third object, or the terminal does not expect the first object and/or the third object to transmit a downlink channel within the first time period, or the terminal monitors the downlink channel of the first object and/or the third object;
   the terminal does not transmit an uplink channel of the first object and/or the third object, or the terminal transmits an uplink channel of the first object and/or the third object;
   the terminal does not monitor a first reference signal of the first object and/or the third object, where the first reference signal is a reference signal other than a preset reference signal, or the terminal monitors all reference signals of the first object and/or the third object; where the preset reference signal includes at least one of a reference signal for L1 measurement, a reference signal for L3 measurement, and a network-configured reference signal;
   the terminal does not transmit a second reference signal of the first object and/or the third object, where the second reference signal is a reference signal other than a preset reference signal, or the terminal transmits all reference signals of the first object and/or the third object; where the preset reference signal includes at least one of a reference signal for L1 measurement, a reference signal for L3 measurement, and a network-configured reference signal;
   the terminal does not transmit an uplink signal and/or channel of a fourth object, or the terminal transmits an uplink signal and/or channel of the fourth object, where the fourth object is an object different from the third object in the at least one second object; and
   the terminal does not monitor a downlink signal and/or channel of the fourth object, or the terminal does not expect the fourth object to transmit a downlink signal and/or channel within the first time period, or the terminal monitors a downlink signal and/or channel of the fourth object.

Optionally, a starting time point of the first time period is a first time point, and/or an ending time point of the first time period is a second time point; where
the first time point includes at least one of the following:
a time point of receiving the second signaling;
a time point at which the terminal starts or finishes higher-layer handover preparation work;
a time point corresponding to the X1-th time unit after a slot in which the terminal feeds back an acknowledgement ACK of the second signaling;
a time point corresponding to the X2-th time unit before the 1st symbol or slot in which the terminal receives or transmits a signal and/or channel of the third object; and
a pre-specified or pre-configured time point or a time point indicated by preset signaling; and
the second time point includes at least one of the following:
   a corresponding time point obtained by adding a first preset time period to the starting time point of the first time period, where the first preset time period is a pre-specified or pre-configured time period or a time period indicated by preset signaling;
   a time point of receiving first-type signaling, or a time point associated with a time point of receiving the first-type signaling;
   a time point of receiving a first-type channel, or a time point associated with the time point of receiving the first-type channel; and
   a time point corresponding to expiration of a first timer, where a starting time of the first timer is specified by the protocol, and a duration of the first timer is configured by a network.

Optionally, a time length of the first preset time period is determined based on at least one of the following:
a processing delay of the second signaling;
a transmission delay for feeding back an ACK of the second signaling;
a processing delay of higher-layer handover preparation for the terminal;
a beam handover delay;
a transmission delay between the first object and the third object;
a time required for CSI measurement and reporting;
an uplink synchronization time;
a time-frequency synchronization time; and
a time length corresponding to the number of occurrences of a first event.

Optionally, the processor 910 is configured to:
in a case that a second condition is met, determine that handover from the first object to the third object is successful; where
the second condition includes at least one of the following:
   within a second time period, a measured value of a third reference signal meets a third condition;
   within the second time period, the number of times the terminal sends a preamble to the third object is less than N, where a value of N is configured by a network or specified by a protocol;
   within the second time period, the terminal successfully accesses the third object; and
   the first timer has not expired at an ending time point of the second time period.

Optionally, the third condition includes at least one of the following:
an average measured value of the third reference signal within the second time period is greater than a first threshold;
all measured values of the third reference signal within the second time period are greater than a second threshold;
at least one measured value of the third reference signal within the second time period is greater than a third threshold; and
measured values of the third reference signal within the second time period are greater than measured values of all or part of reference signals of the first object.

Optionally, a starting time point of the second time period is a third time point, and/or an ending time point of the second time period is a fourth time point; where
the third time point includes at least one of the following:
a time point of receiving the second signaling;
a time point at which the terminal starts or finishes higher-layer handover preparation work;
a time point corresponding to the X3-th time unit after a slot in which the terminal feeds back an acknowledgement ACK of the second signaling; and
a pre-specified or pre-configured time point or a time point indicated by preset signaling.

The fourth time point includes at least one of the following:
a corresponding time point obtained by adding a second preset time period to the starting time point of the second time period, where the second preset time period is a pre-specified or pre-configured time period or a time period indicated by preset signaling;
a time point of receiving first-type signaling, or a time point associated with a time point of receiving the first-type signaling;
a time point of receiving a first-type channel, or a time point associated with the time point of receiving the first-type channel; and
a time point corresponding to expiration of a first timer, where a starting time of the first timer is specified by the protocol, and a duration of the first timer is configured by a network.

Optionally, a time length of the second preset time period is determined based on at least one of the following:
a processing delay of the second signaling;
a transmission delay for feeding back an ACK of the second signaling;
a processing delay of higher-layer handover preparation for the terminal;
a transmission delay between the first object and the third object;
a time required for CSI measurement and reporting;
a transmission time of an uplink signal and/or channel;
an uplink synchronization time;
a time-frequency synchronization time; and
a time length corresponding to the number of occurrences of a first event.

Optionally, the first-type signaling includes at least one of the following:
signaling indicating an L3-based handover;
signaling indicating handover cancellation;
signaling indicating successful handover; and
signaling for reconfiguring or activating reception assistance information of a signal of the third object; or
the first-type channel includes at least one of the following:
   a signal and/or channel of the third object received or sent by the 1st terminal.

Optionally, the radio frequency unit 901 is configured to:
perform data transmission according to a first rule during handover from the first object to the third object or after handover to the third object; where
the first rule includes at least one of the following:
   the terminal transmits at least part of channels and/or signals of the third object according to second indication information carried in the second signaling;
   the terminal transmits at least part of channels and/or signals of the third object according to an uplink signal resource indication carried in the second signaling; and
   the terminal transmits at least part of channels and/or signals of the third object based on network-configured and/or indicated beam information.

In this embodiment of this application, the terminal obtains the first signaling and the second signaling, obtains the configuration information of the first object and the second object according to the first signaling, determines, according to the second signaling, whether to perform handover, determines the target object for handover (one of the second objects, namely the third object), then obtains the configuration information of the third object from the obtained configuration information, and hands over from the first object to the third object based on the configuration information of the third object. In this process, the terminal does not need to parse higher-layer handover signaling to obtain the configuration information of the target object for handover. In addition, advance RACH being performed to implement uplink synchronization of the target object for handover greatly reduces a cell handover delay, while operations of tracking downlink time-frequency synchronization of the second object in advance and performing CSI measurement and reporting of the second object in advance can further reduce a communication interruption time of the terminal and improve reliability and transmission efficiency of mobility management.

An embodiment of this application further provides a network-side device, including a processor and a communication interface, where the processor is configured to obtain first signaling and second signaling, where the first signaling is used for indicating configuration information of a first object and at least one second object, or for indicating configuration information of at least one second object, and the second signaling is used for indicating information related to a first operation, where the first operation includes that the terminal is handed over from the first object to a third object, and the third object is an object in the at least one second object. The network-side device embodiments correspond to the foregoing network-side device method embodiments, and the implementation processes and implementations of the foregoing method embodiments can be applied to the network-side device embodiments, with the same technical effects achieved.

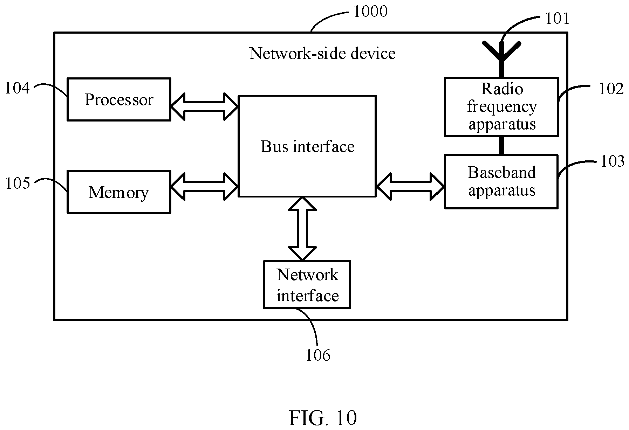

Specifically, an embodiment of this application further provides a network-side device. As shown in FIG. 10, the network-side device 1000 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes to-be-sent information, and sends the information to the radio frequency apparatus 102; and the radio frequency apparatus 102 processes the received information and then sends the information out by using the antenna 101.

The method executed by the network-side device in the foregoing embodiments can be implemented in the baseband apparatus 103, and the baseband apparatus 103 includes a baseband processor.

The baseband apparatus 103 may include, for example, at least one baseband board, where a plurality of chips are disposed on the baseband board. As shown in FIG. 10, one of the chips is, for example, a baseband processor, and is connected to the memory 105 through the bus interface, to invoke a program in the memory 105 to perform the operations of the network device shown in the foregoing method embodiments.

The network-side device may further include a network interface 106, where the interface is, for example, a common public radio interface (common public radio interface, CPRI).

Specifically, the network-side device 1000 in this embodiment of the present invention further includes: instructions or a program stored in the memory 105 and executable on the processor 104. The processor 104 invokes the instructions or program in the memory 105 to execute the method executed by the modules shown in FIG. 7, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the handover processing method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiment of the handover processing method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the handover processing method, with the same technical effects achieved. To avoid repetition, details are not repeated herein.

An embodiment of this application further provides a handover processing system, including a terminal and a network-side device, where the terminal can be configured to execute the processes of the foregoing embodiments of the handover processing method on the terminal side, and the network-side device can be configured to execute the processes of foregoing embodiments of the handover processing method on the network-side device side.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described again herein.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communications connections may be implemented by using some interfaces. The indirect couplings or communications connections between apparatuses or units may be implemented in electrical, mechanical, or other forms.

Units described as separate components may or may not be physically separated. A component displayed as a unit may be or may not be a physical unit, that is may be located in one place, or may be distributed in a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure essentially, or the part contributing to the prior art, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes: any medium that can store program code, such as a USB flash drive, a removable hard disk, a ROM, a RAM, a magnetic disk, or an optical disc.

Persons of ordinary skill in the art may understand that all or some of the processes of the methods in the embodiments may be implemented by a computer program controlling relevant hardware. The program may be stored in a computer readable storage medium. When the program runs, the processes of the method embodiments may be included. The storage medium may include: a magnetic disk, an optical disc, a read-only memory (Read-Only Memory, ROM), or a random access memory (Random Access Memory, RAM).

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A handover processing method, comprising:
obtaining, by a terminal, first signaling and second signaling, wherein the first signaling is used for indicating configuration information of a first object and at least one second object, or for indicating configuration information of at least one second object, and the second signaling is used for indicating information related to a first operation, wherein the first operation comprises that the terminal is handed over from the first object to a third object, and the third object is an object in the at least one second object; and
performing, by the terminal, the first operation according to the first signaling and the second signaling.

2. The method according to claim 1, wherein the configuration information indicated by the first signaling comprises at least one of the following:
higher-layer configuration information;
physical layer related configuration information; and
first indication information, wherein the first indication information is used to indicate whether the first object and/or the second object is usable as a target object for handover; or
information indicated by the second signaling comprises at least one of the following:
identification information of at least one first object;
identification information of at least one third object;
at least one piece of second indication information, wherein the second indication information is transmission configuration indicator state information and/or spatial relation indication information;
indication information of at least one uplink signal resource;
at least one time advance TA value;
indication information of at least one RACH resource;
indication information of at least one aperiodic RS resource;
indication information of at least one aperiodic CSI reporting; and
third indication information, wherein the third indication information is used to indicate whether to perform handover.

3. The method according to claim 2, wherein the performing, by the terminal, the first operation according to the first signaling and the second signaling comprises:
performing handover from the first object to the third object in a case that at least one of the first signaling and the second signaling meets a first condition.

4. The method according to claim 3, wherein the first condition comprises at least one of the following:
the second signaling comprises target information;
the first indication information indicates that the third object is usable as a target object for handover;
the third indication information indicates to perform handover;
second indication information comprised in the second signaling is associated with the third object, and the second indication information is used to indicate a control resource set CORESET#0 or a transmission configuration indicator state and/or spatial relation of CORESET#0 and a channel related to CORESET#0;
the second indication information is associated with the third object; and
the second indication information is used to indicate a transmission configuration indicator state and/or spatial relation after handover; wherein
the target information comprises at least one of the following: an identifier of the third object;
identification information of at least one first object;
at least one time advance TA value;
indication information of at least one uplink signal resource;
indication information of at least one RACH resource;
indication information of at least one aperiodic RS resource; and
indication information of at least one aperiodic CSI reporting.

5. The method according to claim 1, further comprising:
performing, by the terminal, transmission and reception of data based on to a first transmission mode within a first time period; wherein
the first transmission mode comprises at least one of the following:
the terminal does not monitor a downlink channel of the first object and/or the third object, or the terminal does not expect the first object and/or the third object to transmit a downlink channel within the first time period, or the terminal monitors the downlink channel of the first object and/or the third object;
the terminal does not transmit an uplink channel of the first object and/or the third object, or the terminal transmits an uplink channel of the first object and/or the third object;
the terminal does not monitor a first reference signal of the first object and/or the third object, wherein the first reference signal is a reference signal other than a preset reference signal, or the terminal monitors all reference signals of the first object and/or the third object; wherein the preset reference signal comprises at least one of a reference signal for L1 measurement, a reference signal for L3 measurement, and a network-configured reference signal;
the terminal does not transmit a second reference signal of the first object and/or the third object, wherein the second reference signal is a reference signal other than a preset reference signal, or the terminal transmits all reference signals of the first object and/or the third object; wherein the preset reference signal comprises at least one of a reference signal for L1 measurement, a reference signal for L3 measurement, and a network-configured reference signal;
the terminal does not transmit an uplink signal and/or channel of a fourth object, or the terminal transmits an uplink signal and/or channel of the fourth object, wherein the fourth object is an object different from the third object in the at least one second object; and
the terminal does not monitor a downlink signal and/or channel of the fourth object, or the terminal does not expect the fourth object to transmit a downlink signal and/or channel within the first time period, or the terminal monitors a downlink signal and/or channel of the fourth object.

6. The method according to claim 5, wherein
a starting time point of the first time period is a first time point, and/or an ending time point of the first time period is a second time point; wherein
the first time point comprises at least one of the following:
a time point of receiving the second signaling;
a time point at which the terminal starts or finishes higher-layer handover preparation work;
a time point corresponding to the X1-th time unit after a slot in which the terminal feeds back an acknowledgement ACK of the second signaling;
a time point corresponding to the X2-th time unit before the 1st symbol or slot in which the terminal receives or transmits a signal and/or channel of the third object; and
a pre-specified or pre-configured time point or a time point indicated by preset signaling; and
the second time point comprises at least one of the following:
a corresponding time point obtained by adding a first preset time period to the starting time point of the first time period, wherein the first preset time period is a pre-specified or pre-configured time period or a time period indicated by preset signaling;
a time point of receiving first-type signaling, or a time point associated with a time point of receiving the first-type signaling;
a time point of receiving a first-type channel, or a time point associated with the time point of receiving the first-type channel; and
a time point corresponding to expiration of a first timer, wherein a starting time of the first timer is specified by the protocol, and a duration of the first timer is configured by a network.

7. The method according to claim 6, wherein a time length of the first preset time period is determined based on at least one of the following:
a processing delay of the second signaling;
a transmission delay for feeding back an ACK of the second signaling;
a processing delay of higher-layer handover preparation for the terminal;
a beam handover delay;
a transmission delay between the first object and the third object;
a time required for CSI measurement and reporting;
an uplink synchronization time;
a time-frequency synchronization time; and
a time length corresponding to the number of occurrences of a first event.

8. The method according to claim 1, further comprising:
in a case that a second condition is met, determining, by the terminal, that handover from the first object to the third object is successful; wherein
the second condition comprises at least one of the following:
within a second time period, a measured value of a third reference signal meets a third condition;
within the second time period, the number of times the terminal sends a preamble to the third object is less than N, wherein a value of N is configured by a network or specified by a protocol;
within the second time period, the terminal successfully accesses the third object; and
the first timer has not expired at an ending time point of the second time period.

9. The method according to claim 8, wherein the third condition comprises at least one of the following:
an average measured value of the third reference signal within the second time period is greater than a first threshold;
all measured values of the third reference signal within the second time period are greater than a second threshold;
at least one measured value of the third reference signal within the second time period is greater than a third threshold; and
measured values of the third reference signal within the second time period are greater than measured values of all or part of reference signals of the first object.

10. The method according to claim 8, wherein a starting time point of the second time period is a third time point, and/or the ending time point of the second time period is a fourth time point; wherein
the third time point comprises at least one of the following:
a time point of receiving the second signaling;
a time point at which the terminal starts or finishes higher-layer handover preparation work;
a time point corresponding to the X3-th time unit after a slot in which the terminal feeds back an acknowledgement ACK of the second signaling; and
a pre-specified or pre-configured time point or a time point indicated by preset signaling; and
the fourth time point comprises at least one of the following:
a corresponding time point obtained by adding a second preset time period to the starting time point of the second time period, wherein the second preset time period is a pre-specified or pre-configured time period or a time period indicated by preset signaling;
a time point of receiving first-type signaling, or a time point associated with a time point of receiving the first-type signaling;
a time point of receiving a first-type channel, or a time point associated with the time point of receiving the first-type channel; and
a time point corresponding to expiration of a first timer, wherein a starting time of the first timer is specified by the protocol, and a duration of the first timer is configured by a network.

11. The method according to claim 10, wherein a time length of the second preset time period is determined based on at least one of the following:
a processing delay of the second signaling;
a transmission delay for feeding back an ACK of the second signaling;
a processing delay of higher-layer handover preparation for the terminal;
a transmission delay between the first object and the third object;
a time required for CSI measurement and reporting;
a transmission time of an uplink signal and/or channel;
an uplink synchronization time;
a time-frequency synchronization time; and
a time length corresponding to the number of occurrences of a first event.

12. The method according to claim 6 or 10, wherein the first-type signaling comprises at least one of the following:
signaling indicating an L3-based handover;
signaling indicating handover cancellation;
signaling indicating successful handover; and
signaling for reconfiguring or activating reception assistance information of a signal of the third object; or
the first-type channel comprises at least one of the following:
a signal and/or channel of the third object received or sent by the 1st terminal.

13. The method according to claim 2, wherein the second indication information in the second signaling further comprises an uplink power control parameter, and the uplink power control parameter comprises at least one of a path loss reference signal, a closed-loop power control configuration parameter, a transmit power basic point, and a path loss compensation factor.

14. The method according to claim 2, wherein in a case that the second signaling is formed by at least one MAC CE, the terminal performs data and/or signal transmission according to a second rule during handover from the first object to the third object or after handover to the third object.

15. The method according to claim 14, wherein the second rule comprises at least one of the following:
in a case that a second MAC CE and a first MAC CE belong to a same transport block, the terminal performs data and/or signal transmission with the third object according to indication information in the second MAC CE; and
in a case that the second MAC CE carries third indication information, the terminal performs data and/or signal transmission with the third object according to the indication information in the second MAC CE.

16. The method according to claim 15, wherein the first MAC CE is a MAC CE carrying fourth indication information, the second MAC CE is a MAC CE carrying other indication information than the fourth information, and the third indication information is used to indicate that the indication information in the second MAC CE is used for data and/or signal transmission of the third object; and the fourth indication information comprises at least one of a handover indication, a third object identifier, and a third object configuration information index.

17. The method according to claim 2, wherein the terminal performs a second operation in a case that the first signaling and the second signaling satisfy a fourth condition.

18. The method according to claim 17, wherein the fourth condition comprises at least one of the following:
first configuration information of the first object is the same as first configuration information of the third object;
the second signaling carries fifth indication information, wherein the fifth indication information is used for indicating the terminal to perform a second operation; and
the second indication information carried in the second signaling has an association relationship with a fourth reference signal.

19. The method according to claim 18, wherein the first configuration information comprises at least one of a transmission configuration indicator list, a spatial relation information list, and a path loss reference signal list.

20. The method according to claim 18, wherein the fourth reference signal is a reference signal, of the first object or the third object, detected by the terminal within a preset time before reception of the second signaling.

21. The method according to claim 18, wherein the second indication information carried in the second signaling has an association relationship with the fourth reference signal, and the association relationship comprises at least one of the following:
a reference signal associated with the second indication information is the same as the fourth reference signal;
a reference signal associated with the second indication information has a direct quasi co-location relationship with the fourth reference signal; and
a reference signal associated with the second indication information has an indirect quasi co-location relationship with the fourth reference signal.

22. The method according to claim 17, wherein the second operation comprises at least one of the following:
the terminal does not perform beam measurement on a reference signal associated with the second indication information;
the terminal does not perform time-frequency tracking on a reference signal associated with the second indication information; and
the terminal does not perform path loss detection on the reference signal associated with the second indication information.

23. The method according to claim 2, further comprising:
in a case that the second signaling comprises no second indication information, performing, by the terminal, data and/or signal transmission according to sixth indication information during handover from the first object to the third object or after handover to the third object.

24. The method according to claim 23, wherein the sixth indication information is indication information received by the terminal before reception of the second signaling, and the sixth indication information is used to indicate at least one of a transmission configuration indicator state, spatial relation information, and a power control configuration parameter.

25. The method according to claim 1, further comprising:
performing, by the terminal, data transmission according to a first rule during handover from the first object to the third object or after handover to the third object; wherein
the first rule comprises at least one of the following:
the terminal transmits at least part of channels and/or signals of the third object according to second indication information carried in the second signaling;
the terminal transmits at least part of channels and/or signals of the third object according to an uplink signal resource indication carried in the second signaling; and
the terminal transmits at least part of channels and/or signals of the third object based on network-configured and/or indicated beam information.

26. A handover processing method, comprising:
sending, by a network-side device, first signaling and second signaling, wherein the first signaling is used for indicating configuration information of a first object and at least one second object, or for indicating configuration information of at least one second object, and the second signaling is used for indicating information related to a first operation, wherein the first operation comprises that the terminal is handed over from the first object to a third object, and the third object is an object in the at least one second object.

27. The method according to claim 26, wherein the sending, by a network-side device, first signaling and second signaling comprises:
sending, by the network-side device, the first signaling through RRC signaling, and sending the second signaling through MAC CE and DCI.

28. The method according to claim 26, wherein the configuration information indicated by the first signaling comprises at least one of the following:
higher-layer configuration information;
physical layer related configuration information; and
first indication information, wherein the first indication information is used to indicate whether the first object and/or the second object is usable as a target object for handover.

29. The method according to claim 26, wherein the information indicated by the second signaling comprises at least one of the following:
identification information of at least one first object;
identification information of at least one third object;
at least one piece of second indication information, wherein the second indication information is transmission configuration indicator state information and/or spatial relation indication information;
indication information of at least one uplink signal resource;
at least one time advance TA value;
indication information of at least one RACH resource;
indication information of at least one aperiodic RS resource;
indication information of at least one aperiodic CSI reporting; and
third indication information, wherein the third indication information is used to indicate whether to perform handover.

30. The method according to claim 29, wherein the second indication information in the second signaling further comprises an uplink power control parameter, and the uplink power control parameter comprises at least one of a path loss reference signal, a closed-loop power control configuration parameter, a transmit power basic point, and a path loss compensation factor.

31. A handover processing apparatus, applied to a terminal and comprising:
a first obtaining module, configured to obtain first signaling and second signaling, wherein the first signaling is used for indicating configuration information of a first object and at least one second object, or for indicating configuration information of at least one second object, and the second signaling is used for indicating information related to a first operation, wherein the first operation comprises that the terminal is handed over from the first object to a third object, and the third object is an object in the at least one second object; and
a first execution module, configured to perform the first operation according to the first signaling and the second signaling.

32. The apparatus according to claim 31, wherein the configuration information indicated by the first signaling comprises at least one of the following:
higher-layer configuration information;
physical layer related configuration information; and
first indication information, wherein the first indication information is used to indicate whether the first object and/or the second object is usable as a target object for handover; or
information indicated by the second signaling comprises at least one of the following:
identification information of at least one first object;
identification information of at least one third object;
at least one piece of second indication information, wherein the second indication information is transmission configuration indicator state information and/or spatial relation indication information;
indication information of at least one uplink signal resource;
at least one time advance TA value;
indication information of at least one RACH resource;
indication information of at least one aperiodic RS resource;
indication information of at least one aperiodic CSI reporting; and
third indication information, wherein the third indication information is used to indicate whether to perform handover.

33. The apparatus according to claim 32, wherein the second indication information in the second signaling further comprises an uplink power control parameter, and the uplink power control parameter comprises at least one of a path loss reference signal, a closed-loop power control configuration parameter, a transmit power basic point, and a path loss compensation factor.

34. A handover processing apparatus, applied to a network-side device and comprising:
a first sending module, configured to send first signaling and second signaling, wherein the first signaling is used for indicating configuration information of a first object and at least one second object, or for indicating configuration information of at least one second object, and the second signaling is used for indicating information related to a first operation, wherein the first operation comprises that the terminal is handed over from the first object to a third object, and the third object is an object in the at least one second object.

35. The apparatus according to claim 34, wherein the first sending module is configured to send the first signaling through RRC signaling, and send the second signaling through MAC CE and DCI.

36. The apparatus according to claim 34, wherein the configuration information indicated by the first signaling comprises at least one of the following:
higher-layer configuration information;
physical layer related configuration information; and
first indication information, wherein the first indication information is used to indicate whether the first object and/or the second object is usable as a target object for handover.

37. The apparatus according to claim 34, wherein the information indicated by the second signaling comprises at least one of the following:
identification information of at least one first object;
identification information of at least one third object;
at least one piece of second indication information, wherein the second indication information is transmission configuration indicator state information and/or spatial relation indication information;
indication information of at least one uplink signal resource;
at least one time advance TA value;
indication information of at least one RACH resource;
indication information of at least one aperiodic RS resource;
indication information of at least one aperiodic CSI reporting; and
third indication information, wherein the third indication information is used to indicate whether to perform handover.

38. The apparatus according to claim 37, wherein the second indication information in the second signaling further comprises an uplink power control parameter, and the uplink power control parameter comprises at least one of a path loss reference signal, a closed-loop power control configuration parameter, a transmit power basic point, and a path loss compensation factor.

39. A terminal, comprising a processor and a memory, wherein a program or instructions executable on the processor are stored in the memory, and when the program or the instructions are executed by the processor, the handover processing method according to any one of claims 1 to 25 is implemented.

40. A network-side device, comprising a processor and a memory, wherein the memory stores a program or instructions executable on the processor, wherein when the program or the instructions are executed by the processor, the handover processing method according to any one of claims 26 to 30 is implemented.

41. A readable storage medium, wherein the readable storage medium stores a program or instructions, and when the program or the instructions are executed by a processor, the handover processing method according to any one of claims 1 to 25 is implemented, or the handover processing method according to any one of claims 26 to 30 is implemented.
